# EUROPÄISCHE PATENTSCHRIFT

(11) **EP 1 131 538 B1**
(45) Veröffentlichungstag und Bekanntmachung des Hinweises auf die Patenterteilung: **26.02.2003**
(21) Anmeldenummer: 99960971.2
(22) Anmeldetag: 11.11.1999
(51) Int. Cl.: F01L 1/02

(54) **STIRNRAD-NOCKENWELLENANTRIEB FÜR EINE BRENNKRAFTMASCHINE**
SPUR WHEEL CAMSHAFT DRIVE FOR AN INTERNAL COMBUSTION ENGINE
PIGNONS DE DISTRIBUTION A DENTURE DROITE POUR MOTEUR THERMIQUE

(30) Priorität: 20.11.1998 DE 19853634
(43) Veröffentlichungstag der Anmeldung: 12.09.2001
(73) Patentinhaber: Volkswagen Aktiengesellschaft, 38436 Wolfsburg (DE)
(72) Erfinder: ENDEWARD, Jürgen, D-38165 Lehre (DE)
(86) Internationale Anmeldenummer: EP9908674
(87) Internationale Veröffentlichungsnummer: WO00031383

(56) Entgegenhaltungen:
- FR-A- 404 587
- GB-A- 195 044
- GB-A- 759 215
- US-A- 4 831 975

## Beschreibung

Die Erfindung betrifft einen Stimrad-Nockenwellenantrieb für eine Brennkraftmaschine mit einem Kurbelwellenrad und einem Nockenwellenrad und wenigstens einem zwischen diesen angeordneten Zwischenzahnrad, wobei die Zahnräder des Stimrad-Nockenwellenantriebs jeweils eine Nabe und einen Zahnkranz aufweisen, gemäß dem Oberbegriff des Anspruchs 1.

In Brennkraftmaschinen mit einem Nockenwellenantrieb, welcher durch mehrere Zahnräder zwischen einer Kurbelwelle und einer Nockenwelle realisiert ist, ergeben sich durch mehrere Einflüsse Schwingungsbelastungen des Nockenwellenantriebs. So erfolgt insbesondere bei einer Diesel-Brennkraftmaschine bei einem Arbeitstakt in einem Zylinder eine relativ kräftige, jedoch kurzzeitige Anregung der Kurbelwelle, während in Zeiten zwischen jeweiligen Arbeitstakten nahezu kein Drehmoment auf die Kurbelwelle wirkt. Dies ergibt eine relativ ungleichmäßige, ungleichförmige Bewegung der Kurbelwelle mit mehr oder weniger ruckartig schwingender Bewegung. Toleranzen bei Bauteilen des Nockenwellenantriebs führen zu entsprechendem Spiel zwischen miteinander kämmenden Zahnflanken der Zahnräder, wodurch sich Schwingungen im Nockenwellenantrieb entsprechend fortsetzten können. Ein derartiges Spiel wird zusätzlich noch dadurch verstärkt, daß häufig Stahlzahnräder bzw. für den Nockenwellenantrieb Bauteile aus Stahl Verwendung finden, wogegen das Kurbelgehäuse aus Aluminium gefertigt ist. Durch entsprechend unterschiedliche Temperaturausdehnungskoeffizienten ist somit ein Achsabstand zwischen jeweiligen Zahnrädern des Nockenwellenantriebs während des Betriebes der Brennkraftmaschine nicht mehr konstant, was zu zusätzlichem Spiel führt.

Dieses erhöhte Spiel im Nockenwellenantrieb hat dreierlei unerwünschte Nebeneffekte. Erstens ist eine Synchronisation zwischen Kurbelwelle und Nockenwelle sozusagen verwischt, da Relativbewegungen zwischen Nockenwelle und Kurbelwelle möglich sind. Insbesondere bei Brennkraftmaschinen mit einem integrierten Pumpe-Düse-System, bei dem die Nockenwelle auch die Einspritzzeiten unmittelbar bestimmt, kommt es zu Verschiebungen der Einspritzzeiten und somit zu einem nicht optimalen Betrieb der Brennkraftmaschine. Zweitens pflanzt sich die ungleichförmige Bewegung der Kurbelwelle als Schwingung durch den Nockenwellenantrieb bis in die Nockenwelle fort und führt dort zusätzlich beispielsweise zu nicht genau vorbestimmten Einspritz- und Ventilbetätigungszeiten. Drittens kommt es durch das Spiel zu erhöhter Geräuschentwicklung, was in Personenkraftwagen von den Insassen als störend empfunden werden kann.

Ein besonders großes Spiel zwischen einem Nockenwellenzahnrad und einem letzten, mit dem Kurbelwellenzahnrad kämmenden Zahnrad des Nockenwellenantriebs ergibt sich femer mit zunehmender Zahl der Zahnräder zwischen Kurbelwelle und Nockenwelle, da sich Toleranzen und Achsabstandsungenauigkeiten entsprechend aufsummieren.

Weiter verstärkt werden oben erwähnte Schwingungen durch gegen eine Drehrichtung der Nockenwelle auf diese wirkende Kräfte, beispielsweise bei der Betätigung einer Kraftstoffpumpe eines Pumpe-Düse Elementes, wobei ein Nocken der Nockenwelle einen großen Widerstand zu überwinden hat. Dies führt bei entsprechendem Spiel im Nockenwellenantrieb zu einer Rückwirkung auf diesen und entsprechenden Relativbewegungen zwischen Nockenwelle und Kurbelwelle mit entsprechend verschobenen Steuerzeiten für die Pumpe-Düse-Elemente und Ventile.

Aufgrund aller o.g. Nachteile kommt ein Nockenwellenantrieb mittels Zahnrädern bzw. Stimrädem in Personenkraftwagen praktisch nicht zum Einsatz. Ein Nockenwellenantrieb durch Stimräder kommt beispielsweise nur bei kleinem Abstand zwischen Kurbelwelle und Nockenwelle, also bei untenliegender Nockenwelle, zur Anwendung. Dabei ist es zur Verringerung des Spieles bereits vorgesehen, schrägverzahnte Zahnräder vorzusehen, damit ein möglichst geräuscharmer Lauf erzielt wird. Trotzdem erzielen derartige Stirnrad- bzw. Zahnrad-Nockenwellenantriebe bisher nicht den Komfort, die Laufruhe und Genauigkeit eines Nockenwellenantriebs mit Zahnriemenrädem oder Kettenrädern mit Rollenkette.

Aus dem Selbststudienprogramm Nr. 197 "Der 2,8 l Dieselmotor im LT '97", herausgegeben von der Volkswagen AG, Wolfsburg, Stand 08/97 ist ein gattungsgemäßer Stimrad-Nockenwellenantrieb bekannt, wobei zwischen einem Zwischenzahnrad der Nockenwelle und einem Zwischenrad des Antriebs für die Nockenwelle eine Abstandsgabel derart vorgesehen ist, daß ein vorgeschriebenes Zahnflankenspiel erreicht wird. Das Zwischenzahnrad der Nockenwelle ist dabei auf einem Einstellager-Hebel angeordnet, welcher zur Montage um eine Drehachse des Nockenwellenrades schwenkbar ist. An dem anderen Zwischenrad ist die Abstandsgabel zur Montage schwenkbar angelenkt. Nach der Montage wird die Abstandsgabel festgezogen, so daß die Drehachse des Zwischenzahnrades der Nockenwelle festgelegt ist.

Die FR 404 587 A beschreibt das Problem einer Torsionsbewegung der Kurbelwelle, die sich auf ein Kurbelwellenzahnrad überträgt. Um dies zu vermindern wird vorgeschlagen, das Kurbelwellenzahnrad über ein elastisches Teil mit der Kurbelwelle zu verbinden, welches die Stöße aufgrund der Torsionsbewegung der Kurbelwelle abdämpfen soll. Eine Fortpflanzung von Schwingungen über den gesamten Stimradantrieb bis In die Nockenwelle kann damit jedoch nicht realisiert werden.

Der vorliegenden Erfindung liegt die Aufgabe zugrunde, einen verbesserten Stirnrad-Nockenwellenantrieb der obengenannten Art zur Verfügung zu stellen, wobei die obengenannten Nachteile überwunden werden und ein schnellstmöglicher Abbau von Schwingungen im Stirnrad-Nockenwellenantrieb sichergestellt ist.

Diese Aufgabe wird erfindungsgemäß durch einen Stirnrad-Nockenwellenantrieb der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß das Nockenwellenrad derart ausgebildet ist, daß der jeweilige Zahnkranz gegen die jeweilige Nabe um einen vorbestimmten Winkel gegeneinander verdrehbar sind, wobei eine Rückstelleinrichtung zwischen der Nabe und dem Zahnkranz vorgesehen ist, welche in Abhängigkeit von der Verdrehung eine rückstellende Kraft auf beide ausübt.

Dies hat den Vorteil, daß Schwingungen zwischen dem Zahnkranz und der Nabe abgebaut werden, ohne eine Synchronisierung zwischen einer Kurbelwelle und einer Nockenwelle der Brennkraftmaschine zu beeinflussen. Insbesondere ergibt sich der Vorteil, daß durch Nachgiebigkeit im Nockenwellenantrieb bzw. Einspritzsystemantrieb induzierte Drehmomentspitzen an der Nockenwelle bzw. am Einspritzsystemantrieb reduziert sind. Mit anderen Worten werden Rückwirkungen von Schwingungen von der Nockenwelle in den Stimrad-Nockenwellenantrieb weitgehend verhindert.

Ein wesentlicher Kern der Erfindung liegt in einer Drshmomentirbertragung zwischen einem Antriebsrad und einem Nockenwellenrad bzw. Einspritzsystemantrieb über Federelemente in Kombination mit verdrehwinkelbegrenzenden Endanschlägen.

In einer bevorzugten Ausführungsform sind an der Nabe und dem Zahnkranz jeweils zusammenwirkende, eine Verdrehung begrenzende Anschläge vorgesehen.

Zum Gewährleisten einer optimalen, vorbestimmten Betätigung von Ventilen und ggf. Kraftstoffpumpen durch eine Nockenwelle ist die Rückstelleinrichtung derart ausgebildet, daß bei einem Drehmoment von 80Nm oder mehr die Anschläge aneinander anschlagen.

In einer besonders bevorzugten Ausführungsform umfaßt die Rückstelleinrichtung wenigstens eine Feder, insbesondere Blattfeder, wobei die Fedem beispielsweise U-förmig ausgebildet und zwischen Nabe und Zahnkranz, insbesondere in Umfangsrichtung gleichmäßig beabstandet, angeordnet sind. Zweckmäßlgerweise sind hierzu in der Nabe die Federn aufnehmende Ausnehmungen, insbesondere in Umfangsrichtung gleichmäßig beabstandet, ausgebildet, wobei zum Haltern der Federn in den Ausnehmungen beispielsweise ein Ringdeckel zum Verschließen der Ausnehmungen in der Nabe, insbesondere aufschraubbar, vorgesehen ist.

Für eine optimale Bedämpfung von insbesondere hochfrequenten Schwingungen sind an einem inneren Umfang des Zahnkranzes Erhebungen zwischen zwei Federn derart ausgebildet, daß die Federn eine rückstellende Kraft auf die Erhebungen ausüben, sobald sich bei einer Verdrehung von Zahnkranz und Nabe gegeneinander ein Anschlag der Nabe aus einer Mittelstellung zwischen zwei benachbarten Anschlägen am Zahnkranz heraus bewegt.

In einer besonders bevorzugten Weiterbildung ist zwischen Kurbelwellenrad und Nockenwellenrad wenigstens ein Ausgleich-Zwischenrad angeordnet, dessen Drehachse bezüglich des Kurbelgehäuses frei beweglich ist. Dies hat den Vorteil, daß das bewegliche Ausgleich-Zwischenrad einen sich ändernden Abstand von Drehachsen zwischen zwei benachbarten Zahnrädern durch eine entsprechende Relativbewegung der Drehachse des Ausgleich-Zwischenrades kompensiert, so daß auch bei sich änderndem Abstand der Drehachsen der benachbarten Zahnräder kein Spiel auftritt. Hierdurch werden Steuerzeiten durch die Nockenwelle genauer eingehalten und es ergibt sich ein geräuscharmer Lauf des Stirnrad-Nockenwellenantriebs.

In einer bevorzugten Ausführungsform ist die Drehachse des Ausgleich-Zwischenrades von wenigstens zwei Bügel schwenkbar gehaltert, welche sich an der Drehachse des Ausgleich-Zwischenrades gegenüberliegenden Enden jeweils an festen Drehachsen von zum Ausgleich-Zwischenrad benachbarten Zahnrädern schwenkbar abstützten.

Einen Spielausgleich unmittelbar an der Nockenwelle erzielt man dadurch, daß das Ausgleich-Zwischenrad zwischen dem Nockenwellenrad und einem letzten Zwischenrad des Stirnrad-Nockenwellenantrieb angeordnet ist. Da sich an dieser Stelle das gesamte Spiel des Stirnrad-Nockenwellenantrieb aufsummiert, ergibt sich somit ein maximaler Spielausgleich.

Zweckmäßigerweise erzielt man ein Übersetzungsverhältnis von der Kurbelwelle zur Nockenwelle von 2:1 dadurch, daß ein Verhältnis der Zähnezahl zwischen dem Ausgleich-Zwischenrad und einem benachbarten Zwischenrad entsprechend gewählt ist. Hierbei ist das benachbarte Zwischenrad beispielsweise ein kurbelwellenseitiges Zwischenrad.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform eines erfindungsgemäßen Stirnrad-Nockenwellenantriebs in Aufsicht,
- Fig. 2: eine Schnittansicht entlang Linie I-I von Fig. 1,
- Fig. 3 und 4: Explosionsdarstellungen,
- Fig. 5: eine alternative Ausführungsform eines Nockenwellenrades in Rückansicht,
- Fig. 6: eine Schnittansicht entlang Linie A-A von Fig. 5,
- Fig. 7: eine Schnittansicht entlang Linie B-B von Fig. 6 und
- Fig. 8: eine Explosionsdarstellung.

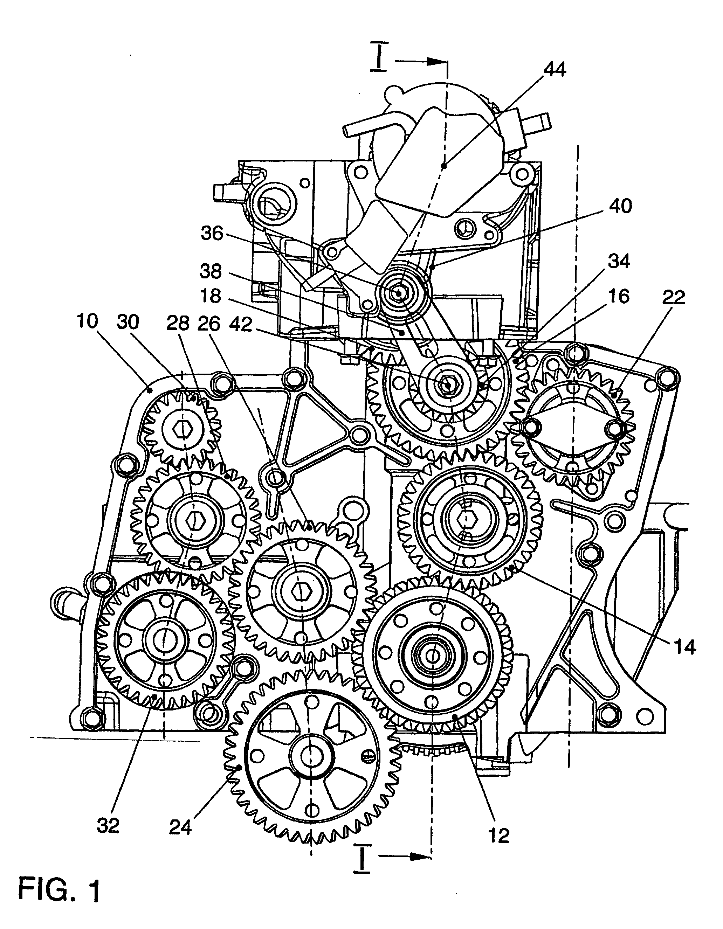

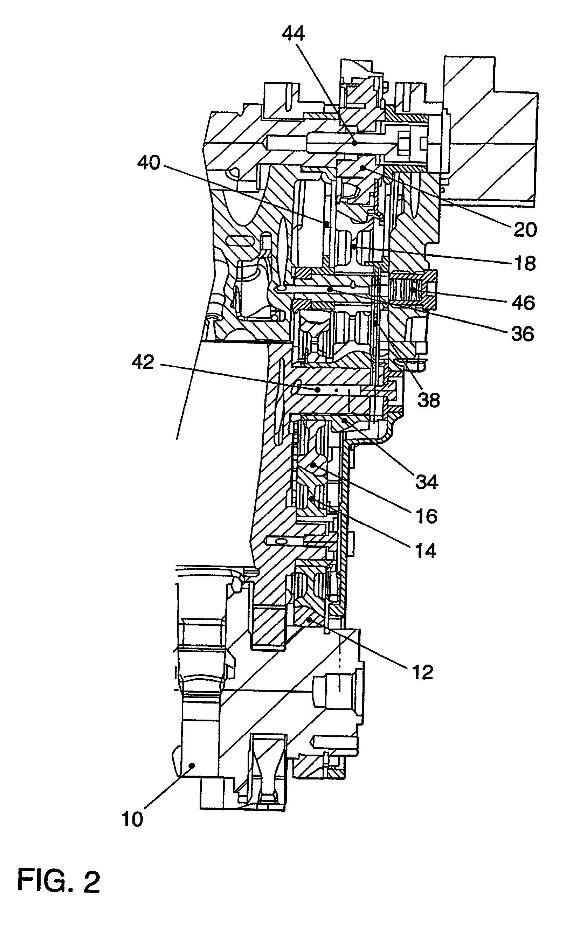

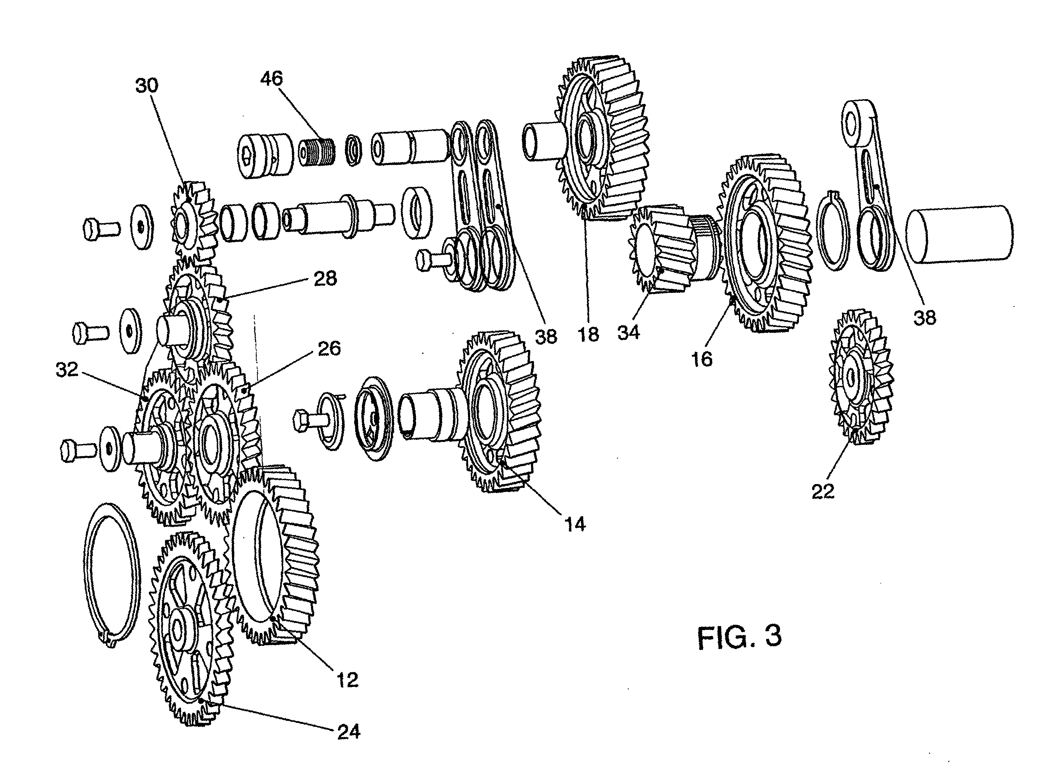

Die in Fig. 1 bis 4 dargestellte bevorzugte Ausführungsform eines erfindungsgemäßen Stirnrad-Nockenwellenantriebs an einem Kurbelgehäuse 10 einer ansonsten nicht näher dargestellten Brennkraftmaschine umfaßt ein Kurbelwellenrad 12, ein erstes Zwischenrad 14, ein zweites Zwischenrad 16, ein Ausgleich-Zwischenrad 18 und ein Nockenwellenrad 20.

Das zweite Zwischenrad 16 kämmt mit einem Antriebszahnrad 22 für eine nicht dargestellte Wasserpumpe. Das Kurbelwellenrad 12 kämmt ferner mit einem Antriebszahnrad 24 für eine nicht dargestellte Ölpumpe sowie mit einem dritten Zwischenrad 26. Das dritte Zwischenrad 26 kämmt wiederum mit einem vierten Zwischenrad 28, welches seinerseits ein Antriebszahnrad 30 eines nicht dargestellten Generators und ein Antriebszahnrad 32 einer nicht dargestellten Hydropumpe kämmend antreibt. Das zweite Zwischenrad 16 ist mit einem weiteren Zahnkranz 34 drehfest verbunden, wobei das zweite Zwischenrad 16 selbst mit dem ersten Zwischenrad 14 und der weitere Zahnkranz 34 mit dem Ausgleich-Zwischenrad 18 kämmt. Eine Zähnezahl des weiteren Zahnkranzes 34 und eine Zähnezahl des Ausgleich-Zwischenrades 18 ist dabei derart gewählt, daß sich vom Kurbelwellenrad 12 zum Nockenwellenrad 20 eine Übersetzung von 2:1 ergibt.

Eine Drehachse 36 des Ausgleich-Zwischenrades 18 ist bezüglich des Kurbelgehäuses 10 und eines Zylinderkopfes frei beweglich und wird lediglich bezüglich der Drehachsen 42, 44 von zweitem Zwischenrad 16 und Nockenwellenrad 20 durch zwei paar Bügel 38 und 40 vorbestimmt. Die Bügel 38 halten mit einer Seite die Drehachse 36 des Ausgleich-Zwischenrades 18 drehbar, während sich eine gegenüberliegende Seite der Bügel 38 an der Drehachse 42 des zweiten Zwischenrads 16 abstützt. Die Bügel 40 halten ebenfalls mit einer Seite die Drehachse 36 des Ausgleich-Zwischenrades 18 drehbar, während sich eine gegenüberliegende Seite der Bügel 38 im Zylinderkopfgehäuse über die Drehachse 44 des Nockenwellenrades 20 abstützt.

Auf dieses Weise ist einerseits ein jeweiliger Abstand der Drehachse 36 zu den Drehachsen 42 und 44 festgelegt. Andererseits können die Bügel 38 und 40 bei sich veränderndem Abstand zwischen den Drehachsen 42 und 44 einen variierenden Winkel zueinander einschließen, so daß das Ausgleich-Zwischenrad 18 immer eng und im wesentlichen spielfrei sowohl mit dem Zahnkranz 34 als auch mit dem Nockenwellenrad 20 kämmt. Die Bügel 38 und 40 bilden somit ein Gelenk mit der Gelenkachse auf der Drehachse 36 des Ausgleich-Zwischenrades 18, welches sich entsprechend ändernden Abständen zwischen den Drehachsen 42 und 44 aufgrund von Wärmeausdehnung mehr oder weniger weit spreizt. Mittels Tellerfedern 46 wird dabei ein Taumeln des Ausgleich-Zwischenrades 18 verhindert.

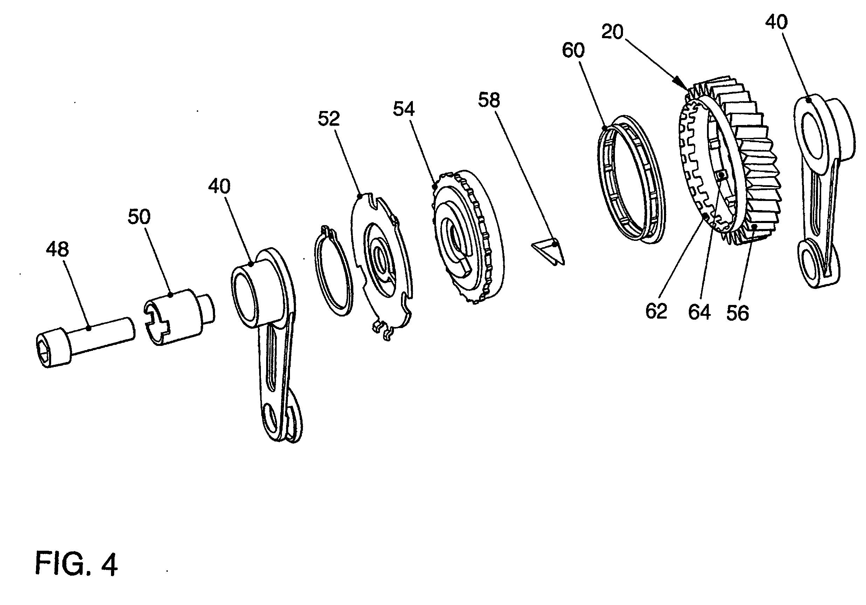

Fig. 4 zeigt einen in Fig. 1 verdeckten Bereich des Stimrad-Nockenwellenantriebs im Bereich des Nockenwellenrades 20. Das Bügelpaar 40 stützt sich im Zylinderkopfgehäuse über die Drehachse 44 des Nockenwellenrades 20 ab, wogegen jeweilige dem Nockenwellenrad 20 gegenüberliegende Enden 49 der Bügel 40 die Drehachse 36 des in Fig. 4 nicht dargestellten Ausgleich-Zwischenrades 18 halten. Mittels einer Schraube 48 und einer Hülse 50 wird die Nockenwellenanordnung verschraubt, welche ferner u.a. ein Geberrad 52 umfaßt.

Wie sich insbesondere aus Fig. 4 ergibt, umfaßt das Nockenwellenrad 20 einen Zahnkranz 56 und eine Nabe 54, welche gegeneinander verdrehbar ausgebildet sind. Hierzu sind in der Nabe 54 in entsprechenden, in Fig. 4 nicht sichtbaren Ausnehmungen U-förmige Federelemente 58, von denen aus Übersichtlichkeitsgründen in Fig. 4 nur eines dargestellt ist, vorgesehen. Diese Federelemente 58 sind in der Nabe 54 in Umfangsrichtung gleichmäßig verteilt angeordnet. Ein Halteelement 60 ist auf die Nabe 54 federseitig aufsetzbar und hält die Federelemente 58 in den Ausnehmungen der Nabe 54.

Die Federelemente 58 stützen sich einerseits in den Ausnehmungen der Nabe 54 ab, wogegen andererseits Enden in Bereiche an einem Innenumfang des Zahnkranzes 56 ragen, in dem Erhebungen 62 ausgebildet sind. Die Anordnung ist dabei derart getroffen, daß sich der Zahnkranz 56 gegen die Nabe 54 verdrehen kann, wobei die Erhebungen 62 bei einer Verdrehung an die Enden der Federelemente 58 Anschlagen. Die Federelemente 58 üben auf diese Weise eine rückstellende Kraft auf die Erhebungen 62 und damit auf den Zahnkranz 56 aus.

Zur Begrenzung des Verdrehwinkels zwischen Zahnkranz 56 und Nabe 54 sind am Zahnkranz 56 Anschläge 64 ausgebildet, welche mit entsprechenden, in Fig. 4 nicht sichtbaren Anschlägen an der Nabe 54 zusammenwirken. Sowohl die Anschläge 64 des Zahnkranzes 56 als auch die Anschläge der Nabe 54 sind in Umfangsrichtung gleichmäßig voneinander beabstandet und zueinander versetzt angeordnet. Sofern ein auf die Nabe wirkendes Drehmoment einen durch die Ausbildung der Federelemente 58 vorbestimmten Wert von beispielsweise 80 Nm überschreitet, schlagen die Erhebungen 62 des Zahnkranzes 56 an die Erhebungen der Nabe 54 an, so daß eine direkte Übertragung des Drehmomentes stattfindet. Auf diese Weise ist eine direkte, kraftschlüssige Verbindung des Stirnrad-Nockenwellenantriebs in solchen Phasen sichergestellt, in denen die Nockenwelle beispielsweise Ventile oder eine Kraftstoffeinspritzpumpe eines Pumpe-Düse-Elementes der Brennkraftmaschine betätigt. Nach beispielsweise einer Betätigung einer Kraftstoffeinspritzpumpe eines Pumpe-Düse-Elementes durch die Nockenwelle läßt eine die Nockenwelle beaufschlagende Gegenkraft plötzlich nach, so daß die Nockenwelle in Nachschwingvorgänge eintritt. Diese werden durch gegenseitiges Verdrehen von Zahnkranz 56 und Nabe 54 unter Einwirkung der Federelemente 58 bedämpft und schnell abgebaut und wirken somit nicht in den Stirnrad-Nockenwellenantrieb oder gar bis zur Kurbelwelle zurück.

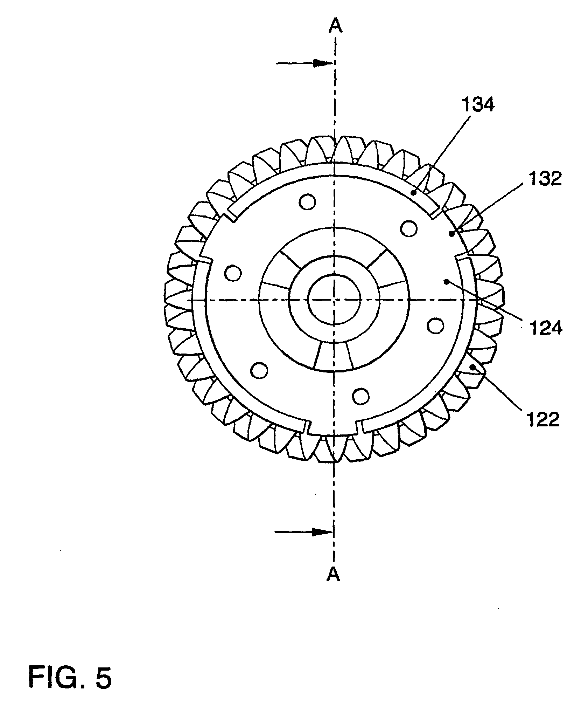

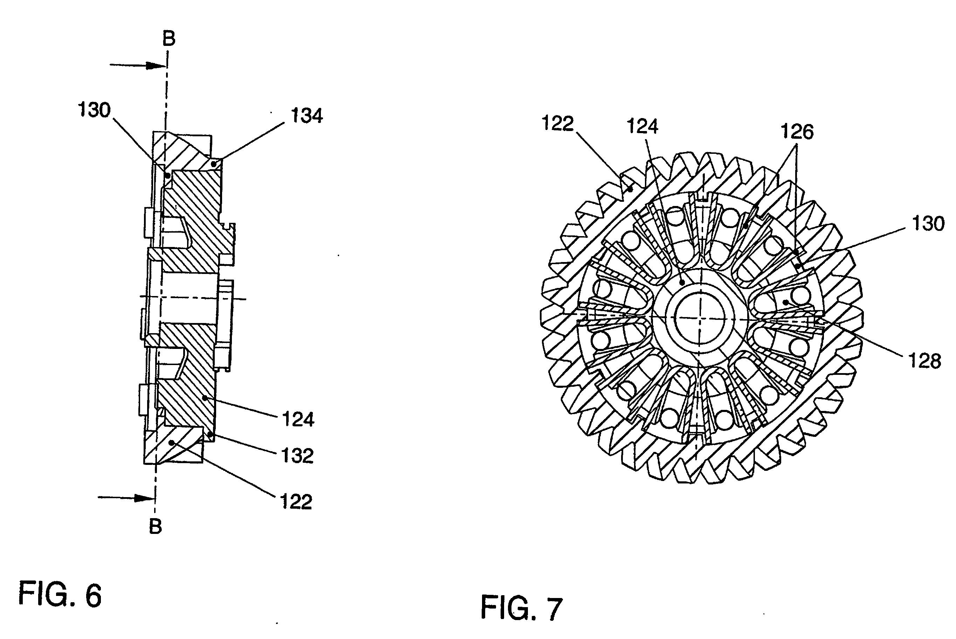

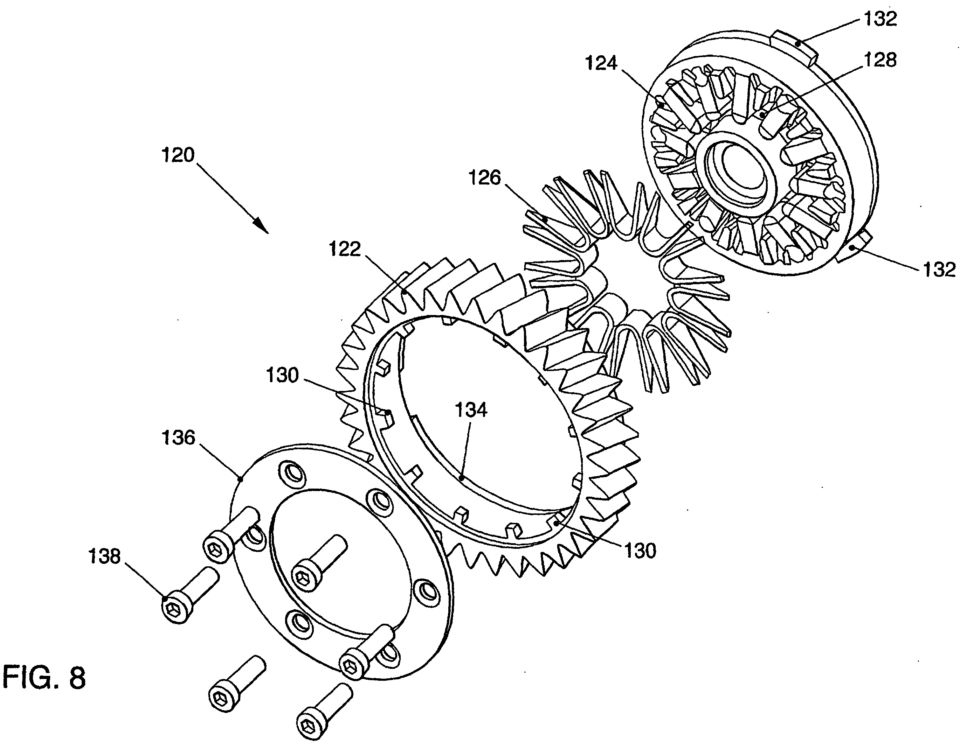

Fig. 5 bis 8 zeigen eine alternative erfindungsgemäße Ausführungsform eines Nockenwellenrades 120 mit einem Zahnkranz 122 und einer Nabe 124, welche unter Einwirkung von Federelementen 126 gegeneinander in einer gedämpften Schwingung verdrehbar sind. Die Federelemente 126 sind U-förmig ausgebildet und in Ausnehmungen 128 derart angeordnet, daß jeweilige Enden der Federelemente 126 radial mit an einem Innenumfang des Zahnkranzes 122 ausgebildeten Erhebungen 130 überlappen, so daß die Federelemente 126 bei einer Verdrehung der Nabe 124 gegen den Zahnkranz 122 eine rückstellende Kraft auf die Erhebungen 130 und damit auf den Zahnkranz 122 ausüben. Hierbei sind an der Nabe 124 Anschläge 132 und an dem Zahnkranz 122 Anschläge 134 gegeneinander versetzt ausgebildet, welche derart zusammenwirken, daß ein Verdrehwinkel zwischen Nabe 124 und Zahnkranz 122 begrenzt ist.

Zum Verschließen der Ausnehmungen 128 und zum Haltern der in diesen befindlichen Federelemente 126 ist ein ringförmiger Deckel 136 vorgesehen welcher mittels Schrauben 138 an der Nabe 124 befestigbar ist. Die Funktionsweise dieser alternativen Ausführungsform entspricht der Funktionsweise der vorangegangenen Ausführungsform, wie zuvor unter Bezugnahme auf Fig. 4 erläutert.

Die erfindungsgemäße Anordnung entspricht gewissermaßen einem mechanischen Tiefpaßfilter. Hochfrequente Schwingungen mit relativ niedrigem Drehmoment werden absorbiert, niederfrequente Schwingungen mit hohem Drehmoment, wie beispielsweise im Extremfall eine Kraftübertragung zur Betätigung eines Pumpe-Düse-Elementes mit der Frequenz null, werden ungedämpft und direkt weiter geleitet.

Obwohl in den vorangegangenen Ausführungsbeispielen lediglich für das Nockenwellenrad 20 bzw. 120 eine Verdrehbarkeit zwischen Zahnkranz 56 bzw. 122 und Nabe 54 bzw. 124 beschrieben ist, ist es in alternativen Ausführungsformen auch möglich jedes andere beliebige Zahnrad des Stirnrad-Nockenwellenantriebs mit einer derartigen Funktion zu versehen. Es ist insbesondere auch möglich mehrere oder alle Zahnräder des Stirnrad-Nockenwellenantriebs mit dieser Verdrehfunktion auszubilden und so zu Impulsabsorbern zu machen.

## Patentansprüche

1. Stimrad-Nockenwellenantrieb für eine Brennkraftmaschine mit einem Kurbelwellenrad (12) und einem Nockenwellenrad (20;120) und wenigstens einem zwischen diesen angeordneten Zwischenzahnrad (14,16,18), wobei die Zahnräder des Stirnrad-Nockenwellenantriebs jeweils eine Nabe (54;124) und einen Zahnkranz (56;122) aufweisen, **dadurch gekennzeichnet, daß** das Nockenwellenrad (20;120), derart ausgebildet ist, daß der jeweilige Zahnkranz (56;122) gegen die jeweilige Nabe (54;124) um einen vorbestimmten Winkel gegeneinander verdrehbar sind, wobei eine Rücksteileinrichtung (58;126) zwischen der Nabe (54;124) und dem Zahnkranz (56;122) vorgesehen ist, welche in Abhängigkeit von der Verdrehung eine rückstellende Kraft auf beide ausübt.

2. Stimrad-Nockenwellenantrieb nach Anspruch 1, **dadurch gekennzeichnet, daß** an der Nabe (54;124) und dem Zahnkranz (56;122) jeweils zusammenwirkende, eine Verdrehung begrenzende Anschläge (64;132,134) vorgesehen sind.

3. Stimrad-Nockenwellenantrieb nach Anspruch 2, **dadurch gekennzeichnet, daß** die Rückstelleinrichtung (58;126) derart ausgebildet ist, daß bei einem Drehmoment von 80Nm oder mehr die Anschläge (64;132,134) aneinander anschlagen.

4. Stirnrad-Nockenwellenantrieb nach einem der vorhergehenden Ansprüche, **dadurch gekennzeichnet, daß** die Rückstelleinrichtung wenigstens eine Feder (58;126), insbesondere Blattfeder, umfaßt.

5. Stimrad-Nockenwellenantrieb nach Anspruch 4, **dadurch gekennzeichnet, daß** die Federn (58;126) U-förmig ausgebildet und zwischen Nabe (54;124) und Zahnkranz (56;122), insbesondere in Umfangsrichtung gleichmäßig beabstandet, angeordnet sind.

6. Stimrad-Nockenwellenantrieb nach Anspruch 4 oder 5, **dadurch gekennzeichnet, daß** in der Nabe (54;124) die Federn (58;126) aufnehmende Ausnehmungen (128), insbesondere in Umfangsrichtung gleichmäßig beabstandet, ausgebildet sind.

7. Stimrad-Nockenwellenantrieb nach einem der Ansprüche 4 bis 6, **dadurch gekennzeichnet, daß** ein Ringdeckel (136) zum Verschließen der Ausnehmungen (128) in der Nabe (124) und zum darin Haltern der Federn (126), insbesondere aufschraubbar, vorgesehen ist.

8. Stimrad-Nockenwellenantrieb nach Anspruch 2 oder 3 und wenigstens einem der Ansprüche 4 bis 7, **dadurch gekennzeichnet, daß** an einem inneren Umfang des Zahnkranzes (56;122) Erhebungen (62;130) zwischen zwei Federn (58;126) derart ausgebildet sind, daß die Federn (58;126) eine rückstellende Kraft auf die Erhebungen (62;130) ausüben, sobald sich bei einer Verdrehung von Zahnkranz (56;122) und Nabe (54;124) gegeneinander ein Anschlag (132) der Nabe (54;124) aus einer Mittelstellung zwischen zwei benachbarten Anschlagen (64;134) am Zahnkranz (56;122) heraus bewegt.

9. Stimrad-Nockenwellenantrieb nach einem der vorhergehenden Ansprüche, **dadurch gekennzeichnet, daß** zwischen Kurbelwellenrad (10) und Nockenwellenrad (20) wenigstens ein Ausgleich-Zwischenrad (18) angeordnet ist, dessen Drehachse (36) bezüglich des Kurbelgehäuses (10) frei beweglich ist.

10. Stimrad-Nockenwellenantrieb nach Anspruch 9, **dadurch gekennzeichnet, daß** die Drehachse (36) des Ausgleich-Zwischenrades (18) von wenigstens zwei Bügeln (38,40) schwenkbar gehaltert ist, welche sich an der Drehachse (36) des Ausgleich-Zwischenrades (18) gegenüberliegenden Enden jeweils an festen Drehachsen (42,44) von zum Ausgleich-Zwischenrad (18) benachbarten Zahnrädern (20,34) schwenkbar abstützen.

11. Stimrad-Nockenwellenantrieb nach Anspruch 9 oder 10, **dadurch gekennzeichnet, daß** das Ausgleich-Zwischenrad (18) zwischen dem Nockenwelienrad (20) und einem letzten Zwischenrad (16) des Stirnrad-Nockenwellenantriebes angeordnet ist.

12. Stirnrad-Nockenwellenantrieb nach einem der Ansprüche 9 bis 11, **dadurch gekennzeichnet, daß** ein Verhältnis der Zähnezahl zwischen dem Ausgleich-Zwischenrad (18) und einem benachbarten Zwischenrad (34) derart gewählt ist, daß sich ein Übersetzungsverhältnis von Kurbelwelle zu Nockenwelle von 2:1 ergibt.

13. Stimrad-Nockenwellenantrieb nach einem der vorhergehenden Ansprüche **dadurch gekennzeichnet, daß** wenigstens eines der Zwischenräder (14,16,18) derart ausgebildet ist, daß der jeweilige Zahnkranz gegen die jeweilige Nabe um einen vorbestimmten Winkel gegeneinander verdrehbar sind, wobei eine Rückstelleinrichtung zwischen der Nabe und dem Zahnkranz vorgesehen ist, welche in Abhängigkeit von der Verdrehung eine rückstellende Kraft auf beide ausübt.

## Claims

1. Spur-wheel/camshaft drive for an internal combustion engine, with a crankshaft wheel (12) and a camshaft wheel (20; 120) and with at least one intermediate gearwheel (14, 16, 18) arranged between these, the gearwheels of the spur-wheel/camshaft drive each having a hub (54; 124) and a toothed rim (56; 122), **characterized in that** the camshaft wheel (20; 120) is designed in such a way that the respective toothed rim (56; 122) is rotatable relative to the respective hub (54; 124) by the amount of a predetermined angle, there being provided between the hub (54; 124) and the toothed rim (56; 122) a resetting device (58; 126) which exerts a resetting force on both of them as a function of the rotation.

2. Spur-wheel/camshaft drive according to Claim 1, **characterized in that** interacting stops (64; 132, 134) limiting a rotation are provided in each case on the hub (54; 124) and the toothed rim (56; 122).

3. Spur-wheel/camshaft drive according to Claim 2, **characterized in that** the resetting device (58; 126) is designed in such a way that the stops (64; 132, 134) butt against one another at a torque of 80 Nm or above.

4. Spur-wheel/camshaft drive according to one of the preceding claims, **characterized in that** the resetting device comprises at least one spring (58; 126), in particular leaf spring.

5. Spur-wheel/camshaft drive according to Claim 4, **characterized in that** the springs (58; 126) are of U-shaped design and are arranged between the hub (54; 124) and the toothed rim (56; 122), in particular spaced uniformly in the circumferential direction.

6. Spur-wheel/camshaft drive according to Claim 4 or 5, **characterized in that** recesses (128) receiving the springs (58; 126) are formed in the hub (54; 124), in particular so as to be spaced uniformly in the circumferential direction.

7. Spur-wheel/camshaft drive according to one of Claims 4 to 6, **characterized in that** an annular cover (136) is provided, in particular so as to be capable of being screwed on, for closing the recesses (128) in the hub (124) and for holding the springs (126) in them.

8. Spur-wheel/camshaft drive according to Claim 2 or 3 and at least one of Claims 4 to 7, **characterized in that** elevations (62; 130) are formed between two springs (58; 126) on an inner circumference of the toothed rim (56; 122), in such a way that the springs (58; 126) exert a resetting force on the elevations (62; 130) as soon as, during a rotation of the toothed rim (56; 122) and the hub (54; 124) relative to one another, a stop (132) of the hub (54; 124) moves out of a middle position between two adjacent stops (64; 134) on the toothed rim (56; 122).

9. Spur-wheel/camshaft drive according to one of the preceding claims, **characterized in that** at least one compensating intermediate wheel (18), the rotary shaft (36) of which is freely movable with respect to the crankcase (10), is arranged between the crankshaft wheel (10) and the camshaft wheel (20).

10. Spur-wheel/camshaft drive according to Claim 9, **characterized in that** the rotary shaft (36) of the compensating intermediate wheel (18) is held pivotably by at least two shackles (38, 40) which are supported pivotably, at ends located opposite the rotary shaft (36) of the compensating intermediate wheel (18), in each case on fixed rotary shafts (42, 44) of gearwheels (20, 34) adjacent to the compensating intermediate wheel (18).

11. Spur-wheel/camshaft drive according to Claim 9 or 10, **characterized in that** the compensating intermediate wheel (18) is arranged between the camshaft wheel (20) and a final intermediate wheel (16) of the spurwheel/camshaft drive.

12. Spur-wheel/camshaft drive according to one of Claims 9 to 11, **characterized in that** a ratio of the number of teeth between the compensating intermediate wheel (18) and an adjacent intermediate wheel (34) is selected such that a transmission ratio from crankshaft to camshaft of 2:1 is obtained.

13. Spur-wheel/camshaft drive according to one of the preceding claims, **characterized in that** at least one of the intermediate wheels (14, 16, 18) is designed in such a way that the respective toothed rim is rotatable relative to the respective hub by the amount of a predetermined angle, there being provided between the hub and the toothed rim a resetting device which exerts a resetting force on both of them as a function of the rotation.

## Revendications

1. Pignon de distribution à denture droite pour un moteur à combustion interne avec un pignon de vilebrequin (12) et un pignon d'arbre à cames (20; 120) et au moins une roue dentée intermédiaire (14, 16, 18) disposée entre ceux-ci, dans lequel les roues dentées du pignon de distribution à denture droite présentent chacune un moyeu (54 ; 124) et une couronne dentée (56 ; 122), **caractérisé en ce que** le pignon d'arbre à cames (20 ; 120) est façonné de telle manière que les couronnes dentées respectives (56 ; 122) puissent tourner par rapport au moyeu respectif (54 ; 124) d'un angle prédéterminé l'une par rapport à l'autre, dans lequel il est prévu un dispositif de rappel (58 ; 126) entre le moyeu (54 ; 124) et la couronne dentée (56 ; 122), qui exerce sur les deux un effort de rappel en fonction de la rotation.

2. Pignon de distribution à denture droite suivant la revendication 1, **caractérisé en ce qu'**il est prévu sur le moyeu (54 ; 124) et la couronne dentée (56 ; 122) des butées (64 ; 132, 134) qui coopèrent respectivement et qui limitent une rotation.

3. Pignon de distribution à denture droite suivant la revendication 2, **caractérisé en ce que** le dispositif de rappel (58 ; 126) est façonné de telle façon que les butées (64 ; 132, 134) butent l'une contre l'autre pour un couple moteur de 80 Nm ou davantage.

4. Pignon de distribution à denture droite suivant l'une quelconque des revendications précédentes, **caractérisé en ce que** le dispositif de rappel comprend au moins un ressort (58 ; 126), en particulier un ressort à lames.

5. Pignon de distribution à denture droite suivant la revendication 4, **caractérisé en ce que** les ressorts (58 ; 126) sont en forme de U et sont disposés entre le moyeu (54 ; 124) et la couronne dentée (56 ; 122), en particulier régulièrement espacés en direction périphérique.

6. Pignon de distribution à denture droite suivant la revendication 4 ou 5, **caractérisé en ce que** des évidements (128) recevant les ressorts (58 ; 126), de préférence régulièrement espacés dans le sens périphérique, sont formés dans le moyeu (54 ; 124).

7. Pignon de distribution à denture droite suivant une des revendications 4 à 6, **caractérisé en ce qu'**il est prévu un couvercle annulaire (136), en particulier à visser, pour fermer les évidements (128) dans le moyeu (124) et pour y maintenir les ressorts (126).

8. Pignon de distribution à denture droite suivant la revendication 2 ou 3 et au moins une des revendications 4 à 7, **caractérisé en ce que** des dents (62 ; 130) sont formées entre deux ressorts (58 ; 126) sur un périmètre intérieur de la couronne dentée (56 ; 122), de telle manière que les ressorts (58 ; 126) exercent une force de rappel sur les dents (62 ; 130) dès que, pour une rotation de la couronne dentée (56 ; 122) et du moyeu (54 ; 124) l'un par rapport à l'autre, une butée (132) du moyeu (54 ; 124) se déplace hors d'une position centrale entre deux butées voisines (64 ; 134) sur la couronne dentée (56 ; 122).

9. Pignon de distribution à denture droite suivant l'une quelconque des revendications précédentes, **caractérisé en ce qu'**au moins un pignon satellite (18), dont l'axe de rotation (36) est mobile librement par rapport au carter du vilebrequin (10), est disposé entre le pignon du vilebrequin (10) et le pignon de l'arbre à cames (20).

10. Pignon de distribution à denture droite suivant la revendication 9, **caractérisé en ce que** l'axe de rotation (36) du pignon satellite (18) est supporté de façon oscillante par au moins deux étriers (38, 40), qui prennent appui de façon oscillante à leurs extrémités opposées à l'axe de rotation (36) du pignon satellite (18) respectivement sur des axes de rotation fixes (42, 44) de roues dentées (20, 34) adjacentes au pignon satellite (18).

11. Pignon de distribution à denture droite suivant la revendication 9 ou 10, **caractérisé en ce que** le pignon satellite (18) est disposé entre le pignon de l'arbre à cames (20) et un dernier pignon satellite (16) du pignon de distribution à denture droite.

12. Pignon de distribution à denture droite suivant une des revendications 9 à 11, **caractérisé en ce qu'**un rapport du nombre de dents entre le pignon satellite (18) et un pignon intermédiaire adjacent (34) est choisi de telle manière qu'il en résulte un rapport de transmission du vilebrequin à l'arbre à cames de 2:1.

13. Pignon de distribution à denture droite suivant l'une quelconque des revendications précédentes, **caractérisé en ce qu'**au moins un des pignons intermédiaires (14, 16, 18) est configuré de telle manière que chaque couronne dentée puisse tourner par rapport au moyeu respectif d'un angle prédéterminé, un dispositif de rappel étant prévu entre le moyeu et la couronne dentée, qui exerce une force de rappel sur les deux en fonction de la rotation.
